# EUROPEAN PATENT APPLICATION

(11) **EP 1 533 599 A1**
(43) Date of publication of application: **25.05.2005**
(21) Application number: 04023838.8
(22) Date of filing: 06.10.2004
(51) Int. Cl.: G01K 13/00

(54) **Electronic clinical thermometer**

(30) Priority: 19.11.2003 CN 200310116349
(71) Applicant: Oriental System Technology Inc., Hsinchu (TW)
(72) Inventor: Lee, Herman Oriental System Technology Inc., Science-Based Industrial Park Hsinchu (TW); Chang, Shun-Chin Oriental System Technology Inc., Science-Based Industrial Park Hsinchu (TW)
(74) Representative: Liesegang, Roland, Dr.-Ing.

(57) **Abstract**

An electrical thermometer comprises a metallic tip and a main body equipped with a probe portion. The front end of the probe portion is fitted into the opening of the metallic tip, which resembles a shell with a blunt end. The probe portion is formed on the main body. A thermal sensor, which is immersed and fixed in thermally conductive glue, is positioned inside the front inner end of the metallic tip. The remaining space within the metallic tip is filled up with a good thermally insulator. The metallic tip can be rapidly heated up with body temperature whenever touched, and the heat will be transferred to the thermal sensor via the thermally conductive glue. In additional, the thermally insulator can stop succeeding heat transfer.

## Description

### BACKGROUND OF THE INVENTION

### 1. Field of the Invention

The present invention relates to an electrical thermometer intended to take human body temperature and more particularly to an electrical thermometer that attains thermal equilibrium rapidly.

### 2. Description of the Related Art

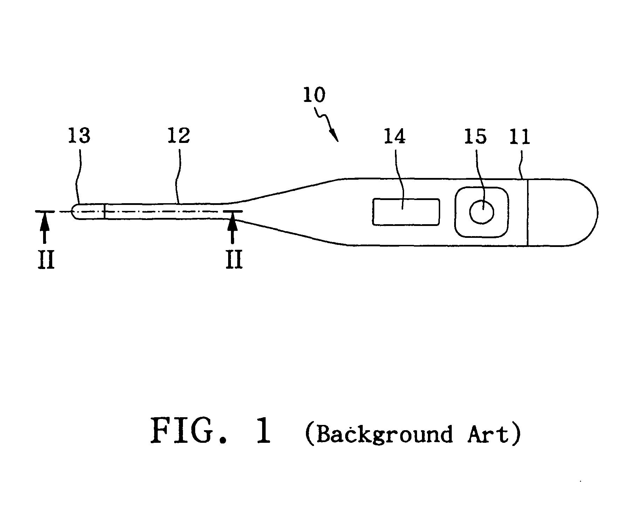

Conventional mercury-based thermometers have plenty of shortcomings. By contrast, electrical thermometers are widely used in taking human body temperature for clinical purposes because it is safe, fast and easy to take body temperature with an electrical thermometer. A known electrical thermometer 10 comprises a main body 11 to be held by hand. The main body 11 is equipped with a tapered probe portion 12 as shown in FIG. 1. A metallic tip 13 is positioned at the front end of the probe portion 12. The metallic tip 13 can rapidly transfer heat generated by a human body to an internal temperature sensor. Furthermore, a display unit 14 and a switch 15 are installed on the main body 11 for users to read data and trigger the measurement action, respectively.

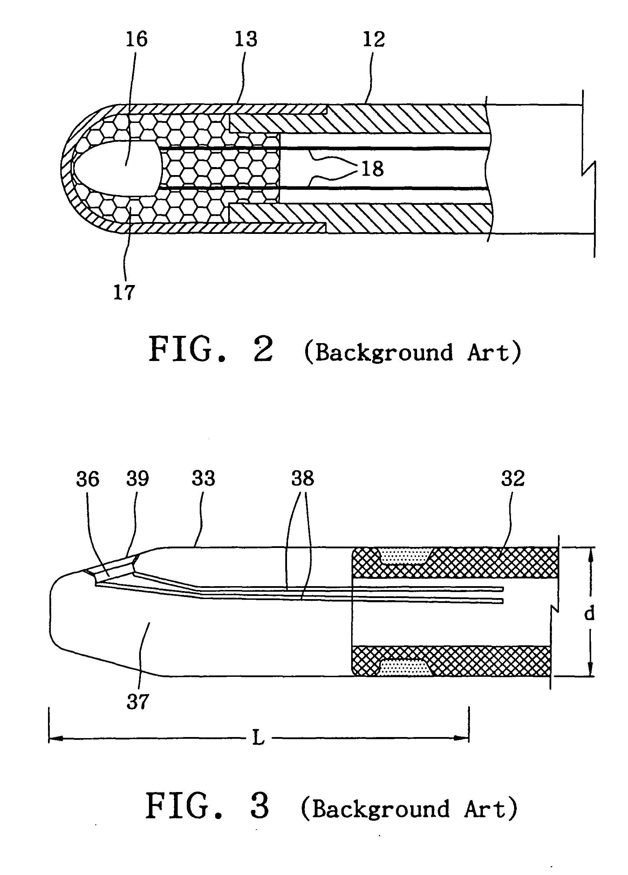

FIG. 2 is a cross-sectional diagram taken along the line II-II in FIG. 1. The metallic tip 13 is a bullet-like shell filled with glue 17. The probe portion 12 is fitted into the opening of the metallic tip 13. A thermal sensor 16, which is completely immersed and fixed in the glue 17, is positioned deep inside the metallic tip 13. A pair of electrically conductive wires 18 can transmit the signals of the thermal sensor 16. If touched, the relatively cool metallic tip 13 is gradually heated up to a higher temperature; meanwhile, the glue 17 can absorb a certain amount of heat and reach a higher temperature as well. The measurement of the body temperature taken by the thermal sensor 16 is not accurate and stable unless and until thermal equilibrium is struck among the whole metallic tip 13, the glue 17 and the human body. In other words, this happens only if there is not any temperature gradient between the metallic end 13 and the glue 17 obviously, and the body temperature read by the thermal sensor 16 does not vary. Both the electrically conductive wires 18 and the probe portion 12 can absorb and transfer heat. However, such a feature does not have any significant effect on the heat equilibrium, because the cross-sectional areas of the electrically conductive wires 18 are extremely small and the probe portion 12 is a good heat insulator. The glue 17 is good heat conductor with a certain heat capacity. Hence, the glue 17 can absorb part of the heat prior to the attainment of the heat equilibrium, delaying its appearance. Generally speaking, it takes 60 to 90 seconds to take body temperature with a conventional electrical thermometer.

In order to reach heat equilibrium between an electrical thermometer and a human body rapidly, the U.S. Patent No. 6,419,388 puts forth a metallic tip 33 with an enlarged size as shown in FIG. 3. The relatively large outer surface represents the existence of a greater contact area between the metallic tip 33 and a human body. More heat is transferred to the whole metallic tip 33 and its deeply embedded thermal sensor 36 per unit time, and thus the heat equilibrium is reached sooner. The thermal sensor 36 is fixed on the inner surface of the metallic tip 33 by means of adhesive 39, which is a good heat conductor. The remaining space is mostly filled with air 37, which is deemed a good heat insulator if still. The length L of the metallic tip 33 has to be at least three times its diameter d. In the preferred embodiment, the length L of the metallic end 33 is five times its diameter d. A probe portion 32 is fitted into the opening of the metallic tip 33. Since the heat of a human body can only be transferred to the thermal sensor 36 by the metallic tip 33 and the adhesive 39 whereas the heat radiation of the air 37 can be neglected, the measurement time for the thermal sensor 36 to reach a steady temperature is limited to one heat flow path.

Although the U.S. Patent No. 6,419,388 puts forth a metallic tip 33 with an enlarged size to accelerate the attainment of heat equilibrium, it has the following disadvantages. First, it specifies the metallic tip 33 of with a particular size, thus the existing metallic tips and probe portions cannot be applied to it; hence, it requires new materials and development expenses for related producing die. Second, the metallic tip 33 is bulky, thus the manufacturing cost of the conventional electrical thermometer is high. Furthermore, the air 37 filled in metallic tip 33 is not still but fluid in convection before heat equilibrium is reached, hence the occurrence of heat exchange from the wall of the metallic tip 33 to the inward air 37 can delay the electrical thermometer to get a steady temperature.

### SUMMARY OF THE INVENTION

An objective of the present invention is to provide an electrical thermometer that attains heat equilibrium rapidly. A thermal sensor is immersed in thermally conductive glue, which is positioned at the front inner end of a metallic tip. The remaining space within the metallic tip is filled up with a good thermal insulator. With such a design, the heat generated by human body can be rapidly transferred to the thermal sensor by the thermally conductive glue, meanwhile the thermal insulator can prevent the heat from being transferred to other materials that can absorb heat so as to accelerate the measurement time.

In order to achieve the objective, the present invention discloses an electrical thermometer that comprises a metallic tip and a main body equipped with a probe portion. The front end of the probe portion is fitted into the opening of the metallic tip, which resembles a shell with a blunt end. The probe portion is formed on the main body. A thermal sensor, which is immersed and fixed in thermally conductive glue, is positioned inside the front inner end of the metallic tip. The remaining space within the metallic tip is filled up with a good thermally insulator. The metallic tip can be rapidly heated up with body temperature whenever touched, and the heat will be transferred to the thermal sensor via the thermally conductive glue. In additional, the thermally insulator can stop succeeding heat transfer.

### BRIEF DESCRIPTION OF THE DRAWINGS

The invention will be described according to the appended drawings in which:
FIG. 1 is a perspective diagram of a conventional electrical thermometer;
FIG. 2 is a cross-sectional diagram taken along the line II-II in FIG. 1;
FIG. 3 is a schematic diagram of the metallic tip disclosed by U.S. Patent No. 6,419,388;
FIG. 4 is a perspective diagram of an electrical thermometer in accordance with the present invention;
FIG. 5(a) is a cross-sectional diagram taken along the line III-III in FIG. 4; and
FIG. 5(b) is a schematic diagram of the metallic tip in accordance with another embodiment of the present invention.

### PREFERRED EMBODIMENT OF THE PRESENT INVENTION

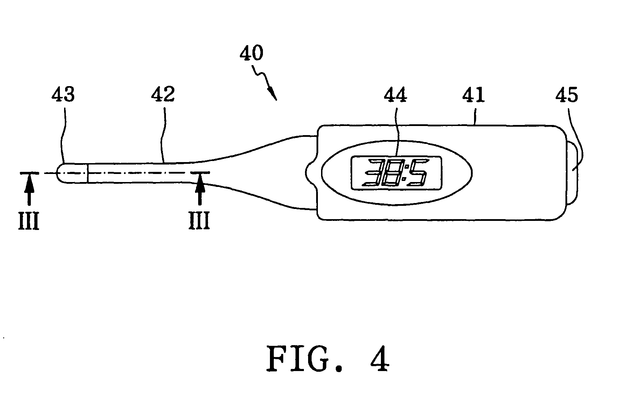

FIG. 4 is a perspective diagram of an electrical thermometer in accordance with the present invention. An electrical thermometer 40 comprises a main body 41 to be held by hand. The main body 41 is equipped with a tapered probe portion 42, thus it is easy to put the probe portion 42 and a metallic tip 43 mounted on its front end under a human being's armpit or into one's oral cavity or anus. In general, the main body 41 and the probe portion 42 are made from a heat insulating plastic material and are formed together in one single piece. The metallic tip 43, which appears in the form of a shell with a blunt tip, is fabricated by stamping a metal sheet. The front end of the probe portion 42 is fitted into the opening of the metallic tip 43.

A display unit 44 is installed on the main body 41 for users to easily read measurement data. A switch 45 is also installed on the main body 41 for users to trigger an internal circuit intended for a measurement action. The display unit 44 is usually a liquid crystal display displaying numbers to indicate the measured temperature, thus it allows users to know their body temperature rapidly. There is also a circuit (not shown in the figures) inside the main body 41 to process the measured electronic signals and turn the electronic signals into signals that meet the specifications required by the display unit 44.

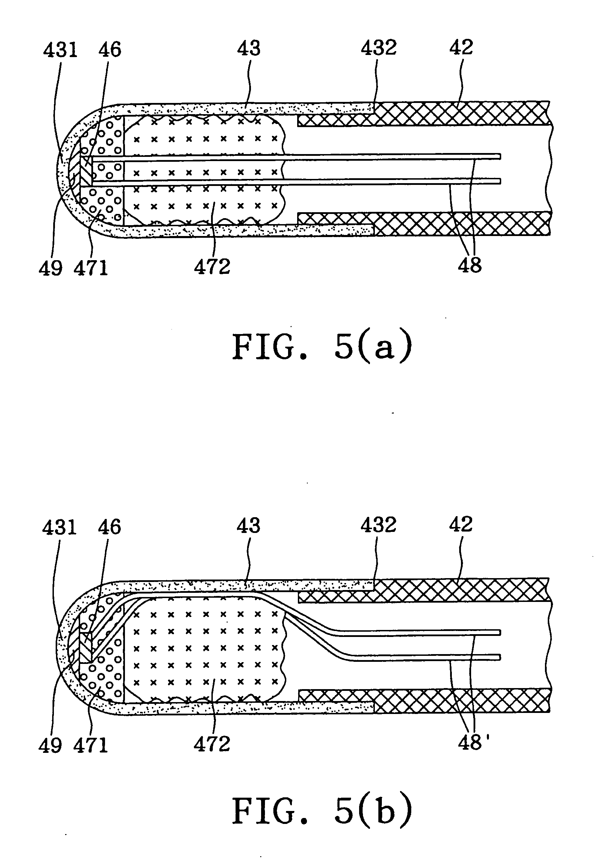

FIG. 5(a) is a cross-sectional diagram taken along line III-III in FIG. 4. The metallic tip 43 is a bullet-like shell. The probe portion 42 is fitted into the opening of the metallic tip 43. The closed end 431 of the metallic tip 43 is filled with thermally conductive glue 471 like a colloidal material. A thermal sensor 46 is completely immersed and fixed in the thermally conductive glue 471. A pair of electrically conductive wires 48, which transmit the electric signals of the thermal sensor 46, are also disposed in the closed end 431 of the metallic tip 43. In order to ensure that the thermal sensor 46 is firmly fixed inside the thermally conductive glue 471, it is recommended that the thermal sensor 46 should be fixed on the inner surface of the closed end 431 by means of adhesive 49 which is a good thermal conductor, to prevent the thermal sensor 46 from sticking out of the thermally conductive glue 471 after the electrically conductive wires 48 were accidentally pulled during an assembling process. The thermally conductive glue 471 can transfer heat to the thermal sensor 46 rapidly. Furthermore, delay in body temperature measurement may arise in the presence of any substance that absorbs heat during the heat flow path. In order to prevent this from happening, it is recommended that the volume of the thermally conductive glue 471 should be less than one-quarter of the inner space of the metallic tip 43. The remaining inner space of the metallic tip 43 is filled up with a good thermal insulator 472. The solid thermal insulator 472 stops heat transfer better than circulating air does.

As shown in FIG. 5(b), in order to eliminate any significant temperature gradient between the electrically conductive wires 48' and the metallic tip 43 so as to shorten the time taken to reach thermal equilibrium, the present invention allows the electrically conductive wires 48' to be pressed against the inner wall of the metallic tip 43, using the thermal insulator 472.

If touched, the relatively cool metallic tip 43 can be gradually heated up to reach a higher temperature, whereas the thermally conductive glue 471 and the electrically conductive wires 48' will absorb a certain amount of heat and reach a higher temperature as well. The measurement of the human body temperature taken by the thermal sensor 46 is not be accurate and stable unless and until thermal equilibrium is struck among the whole metallic tip 43, the thermally conductive glue 471 and the human body. In other words, this can happen only if there is not any temperature gradient between the metallic tip 43 and the thermally conductive glue 471 obviously, and the body temperature read by the thermal sensor 46 does not vary. Both of the electrically conductive wires 48' and the probe portion 42 can absorb and transfer heat. However, such a feature does not have any significant effect on the thermal equilibrium, because the cross-sectional area of the electrically conductive wires 48' are extremely small and the probe portion 42 is made from a good insulating material.

Obviously, in the present invention the thermal sensor 46 is immersed in an appropriate quantity of thermally conductive glue 471. Heat is transferred from the surroundings to the thermal sensor 46 via the thermally conductive glue 471. Thermal equilibrium is reached in the present invention sooner than in U.S. Patent No. 6,419,388. On the other hand, a limitation in the volume of the thermally conductive glue 471 avoids the absorption of too much heat due to its excessive size so as to shorten the time taken to reach thermal equilibrium. In summary, the heat-absorbing group including the thermally conductive glue 471, thermal sensor 46 and metallic tip 43 each with certain thermal capacity can absorb and store some heat, hence we have to consider limiting their volume for reducing the time taken to heat up. By contrast, the thermal insulator 472 with less thermal capacity, occupying the major inner space of the metal tip 43, absorbs very little heat and stops transferring heat to opposite surroundings.

The above-described embodiments of the present invention are intended to be illustrative only. Numerous alternative embodiments may be devised by persons skilled in the art without departing from the scope of the following claims.

## Claims

1. An electrical thermometer, comprising:
a main body (41);
a metallic tip (43) connected to the main body (41) as a shell having an opening end and a closed end;
a thermal conductive glue (471) positioned inside the closed end of the metallic tip;
a thermal sensor (46) fixed in the thermal conductive glue (471); and
a thermal insulator (472) positioned between the opening end of the metallic tip (43) and the thermal conductive glue (471).

2. The electrical thermometer of Claim 1, wherein the volume of the thermal conductive glue (471) is less than one-quarter of the inner space of the metallic tip (43).

3. The electrical thermometer of Claim 1 or 2, wherein the main body (41) has a tapered probe portion (42) on which the metallic tip (43) is mounted.

4. The electrical thermometer of one of Claims 1 to 3, wherein the thermal sensor (46) is fixed on the inner wall of the metallic tip by adhesive (49).

5. The electrical thermometer of one of Claims 1 to 4, wherein the thermal sensor (46) has a plurality of electrically conductive wires (48, 48') which transmit electric signals of the thermal sensor.

6. The electrical thermometer of Claim 5, wherein the electrically conductive wires (48') are pressed against the inner wall of the metallic tip (43).

7. The electrical thermometer of one of Claims 1 to 6, wherein the main body (41) further includes a display unit (44) for showing measured temperature.

8. The electrical thermometer of one of Claims 1 to 7, wherein the main body (41) further includes a switch (45) for triggering a measurement action.
